(19) Europäisches Patentamt / European Patent Office / Office européen des brevets

(11) **EP 2 816 387 A1**

(12) **EUROPEAN PATENT APPLICATION**

(43) Date of publication:
**24.12.2014 Bulletin 2014/52**

(51) Int Cl.:
***G02B 13/00*** (2006.01)    ***G02B 13/18*** (2006.01)

(21) Application number: **13189996.5**

(22) Date of filing: **24.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.06.2013 TW 102211490 U**

(71) Applicant: **Ability Opto-Electronics Technology
Co., Ltd.
Taichung City 428 (TW)**

(72) Inventor: **Tsai, Chen-hung
428 Taichung City (TW)**

(74) Representative: **De Pablos Riba, Julio
Los Madrazo, 24
28014 Madrid (ES)**

(54) **A wide-angle imaging lens assembly with two lenses**

(57)    A wide-angle imaging lens assembly comprises a fixing diaphragm (10) and an optical set including two lenses. An arranging order from an object side to an image side is: a first lens (20) with a positive refractive power defined near an optical axis, a convex surface directed toward the object side, and a convex surface directed toward the image side; and a second lens (30) with a positive refractive power defined near the optical axis, a concave surface directed toward the object side, and a convex surface directed toward the image side. At least one surface of the two lenses (20) (30) is aspheric. The fixingdiaphragm (10) is disposedbetween an object and the second lens (30). By the concatenation between the lenses and the adapted curvature radius, thickness/interval, refractivity, and Abbe numbers, the assembly attains a big diaphragm with ultra-wide-angle, a shorter height, and a better optical aberration.

Fig.1

EP 2 816 387 A1

**Description**

**BACKGROUND OF THE INVENTION**

**1. Field of the Invention**

The present invention relates to a wide-angle imaging lens assembly with two lenses, in particular to a lens structure attaining a shorter height and a high resolution by curvature, interval and optical parameter between each lens.

**2. Description of the Related Art**

The conventional lens structure adopts an image display lens assembly which is applied to smart phone, tablet PC, cell phone, notebook, and webcam. The electronic products are developed to become lighter, thinner, shorter, and smaller and provide with higher efficiency. A video sensor of the image display lens assembly, such as Charge Coupled Device (CCD) or Complementary Metal Oxide Semiconductor (CMOS), is also developed for more pixels, so the lens structure is ceaselessly developed to be provided with compactness and higher resolution.
Therefore, the present invention is disclosed in accordance with a lens structure with multi-lens for a demand of the development of the image display lens assembly, especially to an imaging lens assembly of a lens structure with at least two lenses.

**SUMMARY OF THE INVENTION**

In view of the conventional lens structure that has big volume and lack of efficiency, a wide-angle imaging lens assembly with two lenses is disclosed.
It is an object of the present invention to provide a wide-angle imaging lens assembly with two lenses, which comprises a fixing diaphragm and an optical set. The optical set includes a first lens and a second lens. An arranging order thereof from an object side to an image side is: the first lens having a lens with a positive refractive power defined near an optical axis, a convex surface directed toward the object side, and a convex surface directed toward the image side, and at least one surface of the first lens is aspheric; the second lens having a lens with a positive refractive power defined near the optical axis, a concave surface directed toward the object side, and a convex surface directed toward the image side, and at least one surface of the second lens is aspheric; and the diaphragm disposed between an object and the second lens.
The imaging lens assembly includes at least one inflection point from the optical axis to an end point of the aspheric surfaces is defined on the second lens directed toward the object side.
The imaging lens assembly satisfies the following conditional expression: 0.8<f1/f2<1.3. The f1 and f2 are defined as the focal lengths of the first lens and the second lens, respectively.
A shape of the aspheric surface satisfies a formula of:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16}$$
$$+ Hh^{18} + Jh^{20} + ...$$

The z is defined as a position value about a location at a height of h along a direction of the optical axis referring to a surface top point. The k is defined as a conic constant. The c is a reciprocal of a radius of a curvature. The A, B, C, D, E, etc. are defined as high-order aspheric surface coefficients.
The present invention is characterized in that a lens structure attains a big diaphragm with ultra-wide-angle, a shorter height, and a high resolution by curvature, interval, and optical parameter between each lens.

**BRIEF DESCRIPTION OF THE DRAWINGS**

Fig. **1**    is a schematic view showing an optical structure of a first preferred embodiment of the present invention;
Fig. **2**    is a schematic view showing an astigmatic aberration of the first preferred embodiment of the present invention;
Fig. **3**    is a schematic view showing a distorted aberration of the first preferred embodiment of the present invention;
Fig. **4**    is a schematic view showing a spherical aberration of the first preferred embodiment of the present invention;

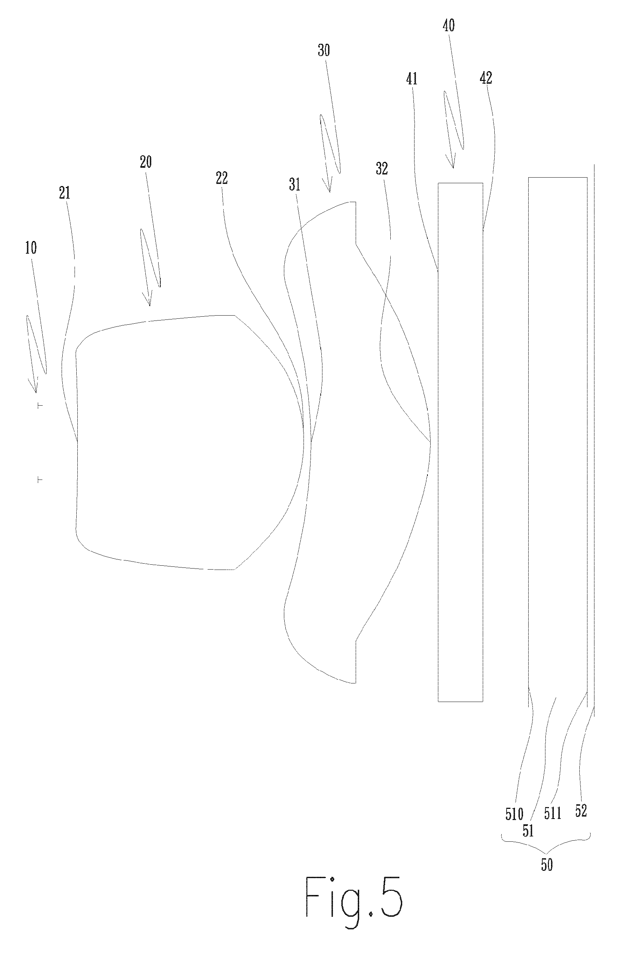

Fig. **5**    is a schematic view showing an optical structure of a second preferred embodiment of the present invention;

Fig. **6**    is a schematic view showing an astigmatic aberration of the second preferred embodiment of the present invention;

Fig. **7**    is a schematic view showing a distorted aberration of the second preferred embodiment of the present invention; and

Fig. **8**    is a schematic view showing a spherical aberration of the second preferred embodiment of the present invention.

## DETAILED DESCRIPTION OF THE PREFERRED EMBODIMENTS

Before describing in detail, it should note that the like elements are denoted by the similar reference numerals throughout disclosure.

The present inventionprovides an imaging lens structure, in particular to a lens structure attaining a big diaphragm with ultra-wide-angle, a shorter height, and a high resolution by a curvature, an interval, and an optical parameter between each lens.

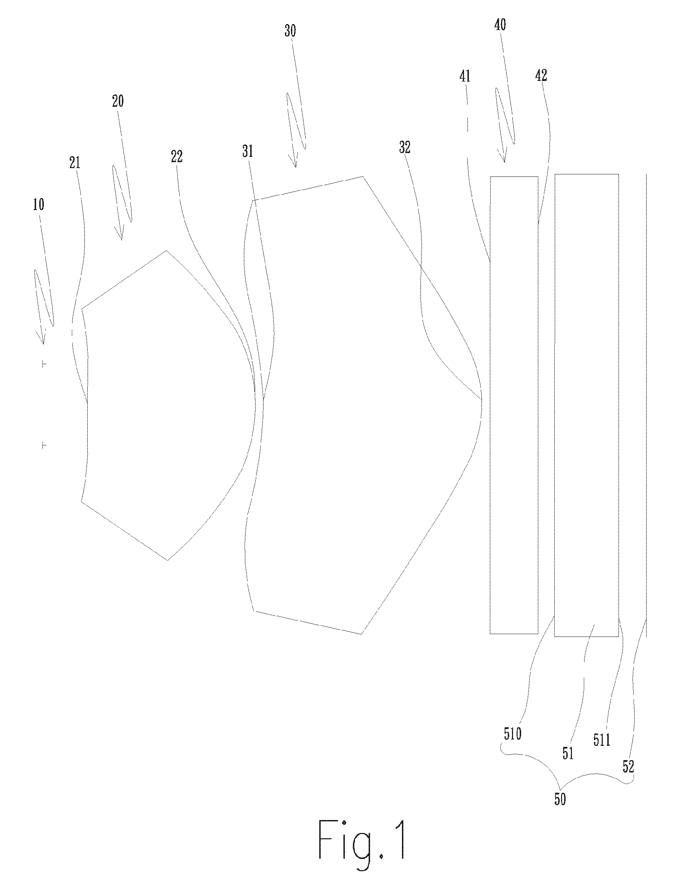

Referring to Fig. **1,** a schematic view of an optical structure of a wide-angle imaging lens assembly with two lenses is shown. The structure of the imaging lens comprises a fixing diaphragm **10** and an optical set. The optical set includes a first lens **20** and a second lens **30**. An arranging order thereof from an object side to an image side is: the first lens **20** with a positive refractive power defined near an optical axis, a convex surface directed toward the object side, and a convex surface directed toward the image side, and at least one surface of the first lens is aspheric; the second lens **30** with a positive refractive power defined near the optical axis, a concave surface directed toward the object side, a convex surface directed toward the image side, at least one surface of the second lens 30 is aspheric, and at least one inflection point defined from the optical axis to an end point of the aspheric surfaces on the second lens **30;** the fixing diaphragm **10** disposed between an object and the second lens 30; a filter unit **40** filtering light with specific wave length and being adopted by an infrared stopping filter unit applied to a visible light image or an infrared bandpass unit applied to an infrared imaging; and an image sensor **50** (an imaging surface side) used for receiving a digital signal transformed by the filter unit. The image sensor **50** includes a flat protection lens **51** and a video sensor **52.** The video sensor **52** is preferably adopted by Charge Coupled Device (CCD) or Complementary Metal Oxide Semiconductor (CMOS).

The imaging lens assembly satisfies the following conditional expression: 0.8<f1/f2<1.3. The f1 and f2 are defined as focal lengths of the first lens and the second lens, respectively.

The first lens **20** includes a first surface **21** facing an object side and a second surface **22** facing the imaging surface side. The first surface **21** is defined as a convex surface disposed near the optical axis opposite to the object side. The second surface 22 is defined as a convex surface disposed near the optical axis opposite to the imaging surface side. The second lens **30** includes a third surface **31** facing the object side and a fourth surface **32** facing the imaging surface side. The third surface **31** is defined as a concave surface disposed near the optical axis opposite to the object side. The fourth surface **32** is defined as a convex surface disposed near the optical axis opposite to the imaging surface side. At least one surface of the first lens **20** and the second lens **30** is aspheric, thereby correcting the spherical aberration and the image aberration for having a characteristic of low tolerance sensitivity.

A shape of the aspheric surface of the imaging lens assembly satisfies a formula of:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16}$$
$$+ Hh^{18} + Jh^{20} + ...$$

The z is defined as a position value about a location at a height of h along a direction of the optical axis referring to a surface top point. The k is defined as a conic constant. The c is a reciprocal of a radius of a curvature. The A, B, C, D, E, etc. are defined as high-order aspheric surface coefficients.

In an ultra-wide-angle micro-optical image capturing device of the present invention, the fixing diaphragm **10** is disposed between the object and the first lens **20** for getting an incident beam. The first lens **20** and the second lens **30** are adopted by lenses with positive refractive power defined near the optical axis. The first lens **20** adopts the first surface **21** convexly defined toward the object side and disposed near the optical axis for assembling the external incident beam with ultra-wide-angle so as to keep the beam on the second surface **22** of the first lens **20,** thereby presenting a function of the aspheric surface, correcting the aberration, reducing the tolerance sensitivity, and rendering the device have ultra-wide-angle with an image-capture angle over 85°. The third surface **31** defined on the second lens **30** as a concave surface and disposed near the optical axis opposite to the object side is then expanded and radiated, so that the beam is able to be spread on the fourth surface **32** of the second lens **30** with a larger dimension. That is to say, the incident beam is expanded and radiated by the third surface **31** so as to be spread on the fourth surface **32** with a larger dimension, thereby presenting the function of aspheric surface, correcting the aberration, and reducing tolerance sensitivity.

The aspheric surface not only corrects the spherical aberration and the image aberration but also reduces the full length of the lens optical system. The first lens **20** and the second lens **30** are preferably adopted by plastic, which is conducive to eliminate the aberration and reduce the weight of the lens. The entire optical system consists of two plastic lenses and benefits a mass production. The optical system also provides with the low tolerance sensitivity to meet a requirement of the mass production.

By the concatenation between the above-mentioned surfaces of lenses and the adapted curvature radius, thickness/interval, refractivity, and Abbe numbers, the assembly attains a big diaphragm with ultra-wide-angle, a shorter height, and a better optical aberration.

First preferred embodiment of the present invention:

Due to the above-mentioned technique of the present invention, it is able to be practiced in accordance with the following values:

| Basic lens data of the first preferred embodiment | | | | | |
|---|---|---|---|---|---|
| Surfaces | | Curvature radius (Radius) | Thickness/Int erval (Thickness) | Refractivity (Nd) | Abbe number (Vd) |
| Fixing diaphragm **10** | | ∞ | 0.29 | | |
| First lens **20** | First surface **21** | 21.38 | 1.03 | 1.58500 | 29.90000 |
| | Second surface **22** | -0.96 | 0.05 | | |
| Second lens **30** | Third surface **31** | -1.89 | 1.35 | 1.58500 | 29.90000 |
| | Fourth surface **32** | -0.68 | 0.06 | | |
| Filter unit **40** | Fifth surface **41** | ∞ | 0.30 | 1.516800 | 64.167336 |
| | Sixth surface **42** | ∞ | 0.23 | | |
| Flat protection lens **51** | Seventh surface **510** | ∞ | 0.40 | 1.516800 | 64.167336 |
| | Eighth surface **511** | ∞ | 0.04 | | |

The filter unit **40** has a thickness of 0.3mm. A thickness of the flat protection lens **51** is 0.4mm.

The A, B, C, D, and E are defined as high-order aspheric surface coefficients.

The values of quadratic surface coefficient of the aspheric surface of the first preferred embodiment are listed as follows:

The first surface **21** (k= -200) :

A: -0.9526660
B: 1.6119010
C: 3.1717149
D: -16.864665
E: 22.826107

The second surface **22** (k=-0.29) :

A: -0.0436547
B: -0.0878423
C: 0.0668450
D: 0.3991920
E: -0.2277371

The third surface **31** (k= 0.85) :

A: 0.1107665
B: 0.1346585
C: -0.0292895
D: -0.0368052
E: 0.0166888

The fourth surface **32** (k= -3.50) :

A: -0.2896172
B: 0.5504785
C: -0.4639722
D: 0.1839356
E: -0.0278005

According to the above-mentioned values, the related exponent of performance of the micro-image capturing lens is: f1=1.64mm; f2=1.33mm; f1/f2=1.23.

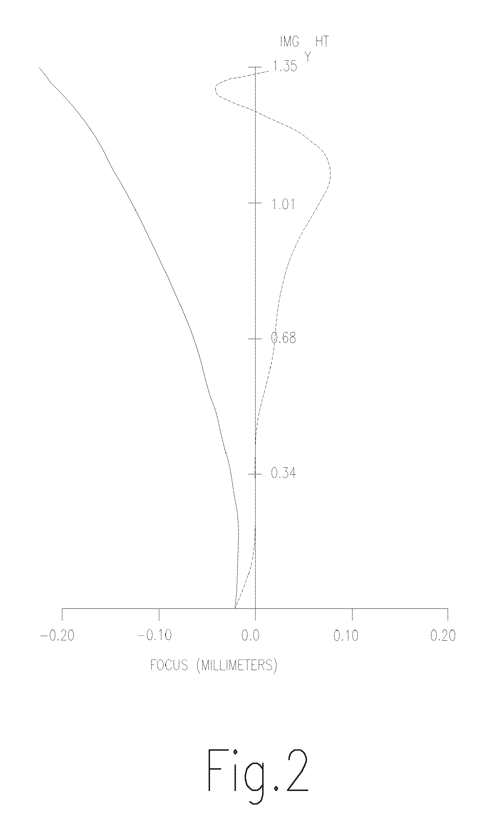

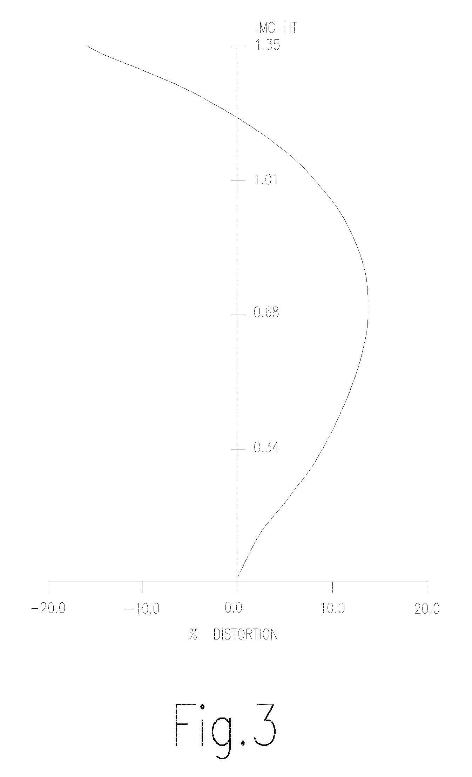

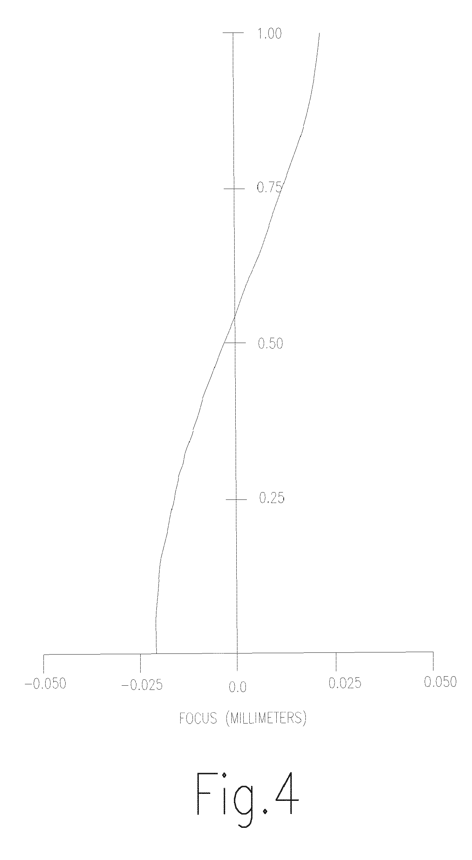

Referring to Fig. **2,** a schematic view of an astigmatic aberration of the first preferred embodiment of the present invention is shown. Referring to Fig. **3,** a schematic view of a distorted aberration of the first preferred embodiment of the present invention is shown. Referring to Fig. **4,** a schematic view of a spherical aberration of the first preferred embodiment of the present invention is shown. The measured astigmatic aberration, distorted aberration, and spherical aberration are in the standard scope and have a good optical performance and imaging quality according to the above-mentioned figures.

Second preferred embodiment of the present invention:

Due to the above-mentioned technique of the present invention, it is able to be practiced in accordance with the following values:

| Basic lens data of the second preferred embodiment | | | | | |
|---|---|---|---|---|---|
| Surfaces | | Curvature radius (Radius) | Thickness/Int erval (Thickness) | Refractivity (Nd) | Abbe number (Vd) |
| Fixing diaphragm **10** | | ∞ | 0.26 | | |
| First lens **20** | First surface **21** | 9.60 | 1.53 | 1.58500 | 29.90000 |
| | Second surface **22** | -0.96 | 0.05 | | |
| Second lens **30** | Third surface **31** | -1.53 | 0.8 | 1.58500 | 29.90000 |
| | Fourth surface **32** | -0.72 | 0.05 | | |
| Filter unit **40** | Fifth surface **41** | ∞ | 0.30 | 1.516800 | 64.167336 |
| | Sixth surface **42** | ∞ | 0.31 | | |

(continued)

| Basic lens data of the second preferred embodiment | | | | | |
|---|---|---|---|---|---|
| Surfaces | | Curvature radius (Radius) | Thickness/Int erval (Thickness) | Refractivity (Nd) | Abbe number (Vd) |
| Flat protection lens **51** | Seventh surface **510** | ∞ | 0.40 | 1.516800 | 64.167336 |
| | Eighth surface **511** | ∞ | 0.04 | | |

The filter unit **40** has a thickness of 0.3mm. A thickness of the flat protection lens **51** is 0.4mm.

The A, B, C, D, E, F and G are defined as high-order aspheric surface coefficients.

The values of quadratic surface coefficient of the aspheric surface of the second preferred embodiment are listed as follows:

The first surface **21** (k=-29.74):

A: -0.8460894
B: 3.0092862
C: -7.0484987
D: 9.1135984
E: 2.7944417
F: -8.9414881
G: 9.0653127

The second surface **22** (k=-0.66) :

A: -0.0852338
B: -0.1847909
C: 0.6000429
D: -0.7269254
E: 0.3243073
F: -0.01225044
G: 0.0059193

The third surface **31** (k=-172.55) :

A: -0.1782629
B: 0.0840052
C: -0.0058281
D: 0.0123393
E: 0.0008514
F: -0.0048850
G: 0.0011975

The fourth surface **32** (k= -17.81) :

A: -0.1963689
B: 0.2001824
C: -0.1813738
D: 0.0818492
E: 0.0136069
F: -0.0262297
G: 0.0068475

According to the above-mentioned values, the related exponent of performance of the micro-image capturing lens is: f1=1.6.1mm; f2=1.76mm; f1/f2=0.92.

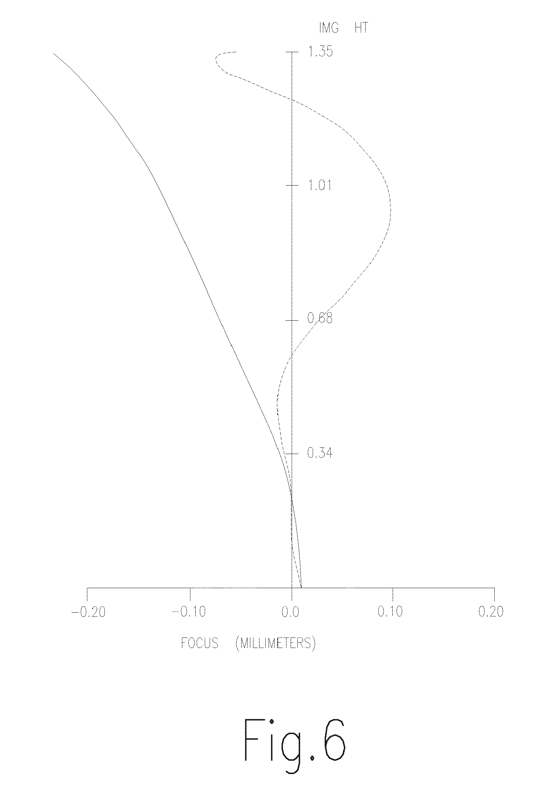

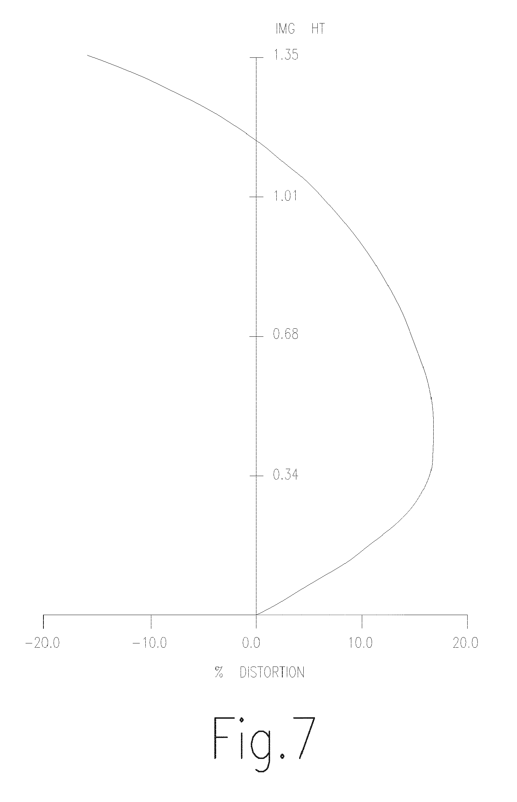

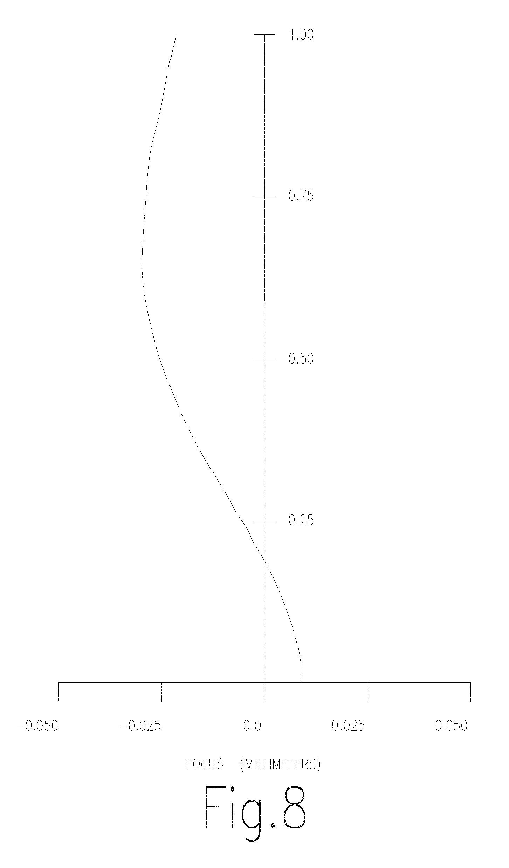

Referring to Fig. **6,** a schematic view of an astigmatic aberration of the second preferred embodiment of the present invention is shown. Referring to Fig. **7,** a schematic view of a distorted aberration of the second preferred embodiment of the present invention is shown. Referring to Fig. **8,** a schematic view of a spherical aberration of the second preferred embodiment of the present invention is shown. The measured astigmatic aberration, distorted aberration, and spherical aberration are in the standard scope and have a good optical performance and imaging quality according to the above-mentioned figures.

The micro-optical image capturing device utilizes two aspheric lenses with positive refractive power defined near the optical axis and the filter unit **40** which filters a light with infrared wave length and allows the visible light with the required wave length. The filter unit **40** is preferably adopted by an infrared stopping filter unit applied to the visible light image or an infrared band-pass unit applied to an infrared imaging.

By making use of the aspheric surface that corrects the aberration and reduces the tolerance sensitivity, not only the aberration is corrected but also the full length of the lens optical system is reduced. Further, the device provides with a ultra-wide-angle with an image capturing angle over 85°. The first and second lenses are preferably adopted by plastic, which is conducive to eliminate the aberration and reduce the weight of the lens. The optical system consists of two plastic lenses and provides with the low tolerance sensitivity. The optical system is also easy to be manufactured and assembled and benefits a mass production. Furthermore, the optical system provides with a fine imaging quality to meet the requirement of miniaturizing the portable image capturing products.

While we have shown and described the embodiment in accordance with the present invention, it should be clear to those skilled in the art that further embodiments may be made without departing from the scope of the present invention.

**Claims**

1. A wide-angle imaging lens assembly with two lenses comprising a fixing diaphragm (10) and an optical set; said optical set including a first lens (20) and a second lens (30), an arranging order thereof from an object side to an image side being:

    said first lens (20) having a lens with a positive refractive power defined near an optical axis, a convex surface directed toward said object side, and a convex surface directed toward said image side; at lease one surface of said first lens (20) being aspheric;
    said second lens (30) having a lens with a positive refractive power defined near the optical axis, a concave surface directed toward said object side, and a convex surface directed toward said image side; at least one surface of said second lens (30) being aspheric; and
    said diaphragm disposed between an object and said second lens (30).

2. The wide-angle imaging lens assembly with two lenses as claimed in claim 1, wherein at least one inflection point from the optical axis to an end point of said aspheric surfaces is defined on said second lens (30) directed toward said object side.

3. The wide-angle imaging lens assembly with two lenses as claimed in claim 1 further satisfying the following conditional expression 0.8<f1/f2<1.3, wherein said f1 and f2 are defined as focal lengths of said first and said second lenses (20) (30), respectively.

Fig.1

IMG HT
Y

1.35

1.01

0.68

0.34

−0.20          −0.10          0.0          0.10          0.20

FOCUS (MILLIMETERS)

Fig.2

IMG HT
1.35

1.01

0.68

0.34

−20.0    −10.0    0.0    10.0    20.0

%   DISTORTION

Fig.3

1.00

0.75

0.50

0.25

−0.050        −0.025         0.0          0.025         0.050

FOCUS (MILLIMETERS)

Fig.4

Fig.5

IMG   HT

1.35

1.01

0.68

0.34

−0.20          −0.10           0.0            0.10            0.20

FOCUS   (MILLIMETERS)

Fig.6

Fig.7

1.00

0.75

0.50

0.25

−0.050       −0.025        0.0        0.025        0.050

FOCUS   (MILLIMETERS)

Fig.8

Europäisches
Patentamt

European
Patent Office

Office européen
des brevets

# EUROPEAN SEARCH REPORT

Application Number

EP 13 18 9996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 170883 A (OPTECH KK) 17 June 2004 (2004-06-17) * abstract; figures 1,2 * * paragraph [0012] * | 1-3 | INV. G02B13/00 G02B13/18 |
| X | US 2004/036983 A1 (NINOMIYA NOBORU [JP] ET AL) 26 February 2004 (2004-02-26) * abstract * * paragraphs [0017], [0053]; figure 1; examples 3-6; table 5 * | 1,2 | |
| A | US 2011/205641 A1 (SHIH BO-YUAN [TW]) 25 August 2011 (2011-08-25) * abstract * * paragraphs [0004], [0020] * | 2 | |
| A | US 7 167 324 B2 (SAITO TOMOHIRO [JP]) 23 January 2007 (2007-01-23) * column 3, line 41 - line 45 * * column 9, line 34 - line 60 * | 2 | |
| A | US 2011/069212 A1 (SHIGEMITSU NORIMICHI [JP] ET AL) 24 March 2011 (2011-03-24) * paragraph [0056] * | 2 | TECHNICAL FIELDS SEARCHED (IPC)  G02B |

The present search report has been drawn up for all claims

| Place of search | Date of completion of the search | Examiner |
|---|---|---|
| The Hague | 20 October 2014 | Cohen, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 18 9996

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2014

| Patent document cited in search report | | | Publication date | Patent family member(s) | | | Publication date |
|---|---|---|---|---|---|---|---|
| JP 2004170883 | A | | 17-06-2004 | NONE | | | |
| US 2004036983 | A1 | | 26-02-2004 | JP | 2003329921 | A | 19-11-2003 |
| | | | | US | 2004036983 | A1 | 26-02-2004 |
| US 2011205641 | A1 | | 25-08-2011 | TW | 200949285 | A | 01-12-2009 |
| | | | | US | 2011205641 | A1 | 25-08-2011 |
| US 7167324 | B2 | | 23-01-2007 | AT | 408167 | T | 15-09-2008 |
| | | | | EP | 1650591 | A1 | 26-04-2006 |
| | | | | JP | 3753183 | B1 | 08-03-2006 |
| | | | | JP | 2006350275 | A | 28-12-2006 |
| | | | | KR | 20060052144 | A | 19-05-2006 |
| | | | | TW | I374329 | B | 11-10-2012 |
| | | | | US | 2006087750 | A1 | 27-04-2006 |
| US 2011069212 | A1 | | 24-03-2011 | CN | 102033296 | A | 27-04-2011 |
| | | | | JP | 2011090018 | A | 06-05-2011 |
| | | | | KR | 20110033041 | A | 30-03-2011 |
| | | | | TW | 201126225 | A | 01-08-2011 |
| | | | | US | 2011069212 | A1 | 24-03-2011 |

EPO FORM P0459